# EUROPÄISCHE PATENTSCHRIFT

(11) **EP 1 979 622 B1**
(45) Veröffentlichungstag und Bekanntmachung des Hinweises auf die Patenterteilung: **07.07.2010**
(21) Anmeldenummer: 07704262.0
(22) Anmeldetag: 31.01.2007
(51) Int. Cl.: F04D 17/12, F04D 25/02

(54) **VERDICHTEREINHEIT**
COMPRESSOR UNIT
Unite de compresseur

(30) Priorität: 03.02.2006 EP 06002310
(43) Veröffentlichungstag der Anmeldung: 15.10.2008
(73) Patentinhaber: SIEMENS AKTIENGESELLSCHAFT, 80333 München (DE)
(72) Erfinder: GAUSMANN, Rainer, 47058 Duisburg (DE); MATHIJSSEN, Gaston, NL-7622VX Borne (NL)
(86) Internationale Anmeldenummer: PCT/EP2007/050938
(87) Internationale Veröffentlichungsnummer: WO 2007/090775

(56) Entgegenhaltungen:
- WO-A-2004/094833
- DE-A1- 19 833 033
- DE-C1- 3 729 486
- US-A1- 2002 037 772
- US-A1- 2004 179 961

## Beschreibung

Die Erfindung betrifft eine Verdichtereinheit, insbesondere für den Unterwasserbetrieb, umfassend einen Verdichter, mit einem Verdichterrotor, der eine oder mehrere Verdichterstufen aufweist, weiterhin umfassend einen elektrischen Motor mit einem Stator und einem Motorrotor und umfassend ein gasdichtes Gehäuse, das mit einem Einlass und einem Auslass versehen ist, wobei der Motorrotor zwei jeweils endseitig angeordnete Radiallager, ein erstes Radiallager und ein zweites Radiallager aufweist, wobei der Verdichterrotor zwei jeweils endseitig angeordnete Radiallager, ein drittes Radiallager und ein viertes Radiallager aufweist und wobei eine Kupplung zwischen den beiden Rotoren angeordnet ist, welche Drehmomente überträgt.

Jüngste Entwicklungen im Bereich des Verdichterbaus fokussieren sich auch auf Unterseeanordnung großer Verdichter, welcher der Förderung von Erdgasen dienen sollen. Aufgrund der besonderen Betriebsbedingungen, insbesondere wegen der stark eingeschränkten Zugänglichkeit sowohl zu Wartungszwecken als auch mittels Versorgungsleitungen sieht sich die Fachwelt vor große Herausforderungen gestellt. Einschlägige Umweltbestimmungen verbieten jeglichen stofflichen Austausch zwischen den zu installierenden Aggregaten und dem umgebenden Seewasser. Hinzukommt, dass das Seewasser ein aggressives Medium ist und in den verschiedenen Meerestiefen extreme Druck- und Temperaturbedingungen anzutreffen sind. Eine weitere Anforderung besteht darin, dass die Aggregate einerseits eine äußerst hohe Standzeit aufweisen sollen und andererseits nahezu wartungsfrei ausgebildet sein müssen. Erschwerend ist zusätzlich eine nicht unerhebliche Verschmutzung des teilweise chemisch aggressiven zu fördernden Mediums.

Eine Verdichtereinheit der vorgenannten Art ist bereits aus der internationalen Patentanmeldung WO 02/099286 A1 bekannt. Mit der Zielsetzung der kompromisslosen Vereinfachung zur Reduzierung des Wartungsaufwandes und bei gleichzeitig hoher Standzeit ist dort vorgeschlagen, den Verdichterrotor mit dem Motorrotor einstückig zu gestalten und mittels lediglich zweier Radiallager jeweils endseitig zu lagern. Zusätzlich ist eine separate Axiallagerung vorgesehen. Mit zunehmender Baugröße zeigt sich jedoch, dass der aufgrund seines hohen Eigengewichtes dynamisch sehr dominante Motorrotor insbesondere aufgrund thermischer Unwucht bei verschiedenen Betriebstemperaturen und entsprechenden Drehzahlen starke Schwingungen verursachen kann, was die Standzeit reduziert bzw. Wartungsintervalle unakzeptabel verkürzt.

Daneben ist es aus der europäischen Patentanmeldung EP 1 074 746 B1 bekannt, einen Turboverdichter mit drei Radiallagern auszustatten, wobei der Motorrotor mittels einer Kupplung mit dem Verdichterrotor in Verbindung steht. Der dynamisch sehr dominante Motorrotor ist hierbei mittels zweier der drei Radiallager gelagert und der Verdichterrotor an der Endseite des sich ergebenden Gesamtrotors mit nur einem Radiallager. Auch hier zeigt sich ab einer bestimmten Größenordnung, dass Schwingungen verhältnismäßig groß werden können.

Aus der US 2002/0037772 A1, der DE 37 29 486 C1, die als nächstliegender Stand der Technik angesehen wird, der US 2004/0179961 A1 und der WO 2004/094833 A1 sind jeweils Verdichter mit direkt angeschlossenem Elektromotor von einem gemeinsamen Gehäuse umgeben bekannt, bei denen die Rotoren des Elektromotors und des Verdichters in verschiedener Weise radial und axial gelagert sind. Beispielsweise ist aus diesen Dokumenten eine Anordnung mit vier Lagern und einer elastischen Kupplung zwischen der Verdichterwelle und der Elektromotorwelle bekannt.

Ausgehend von den Problemen und Nachteilen des Standes der Technik hat es sich die Erfindung zur Aufgabe gemacht, eine verbesserte Verdichtereinheit der eingangs genannten Art zu schaffen, welche bei nur geringem Wartungsaufwand eine lange Standzeit aufweist und insbesondere von einem nur geringen Schwingungsaufkommen gekennzeichnet ist.

Zur Lösung der Aufgabe schlägt die Erfindung eine Verdichtereinheit nach Anspruch 1 vor. Die Unteransprüche beinhalten jeweils vorteilhafte Weiterbildungen der Erfindung.

Der besondere Vorteil der Erfindung liegt in der höchst effizienten Beherrschung der Rotorschwingungen, insbesondere derjenigen, die von der thermischen Unwucht angeregt werden. Die beidseitige Lagerung des Motorrotors führt zunächst zu einer effizienten Dämpfung des dynamisch aufgrund seines Eigengewichts sehr dominanten Motorrotors. Sich dennoch ergebenden Schwingungen können den Verdichterrotor aufgrund seiner ebenfalls beidseitigen Lagerung nicht zu inakzeptablen Schwingungen anregen, da auch dieser an den beiden Lagerpunkten eine gute Dämpfung erfährt. Auf diese Weise kann auch eine große Baugröße selbst bei hohen Drehzahlen dynamisch beherrscht werden.

Weitere Vorteile erbringt die Anordnung der Kupplung zwischen den beiden Rotoren, die nicht nur auf die Montage bezogen sind. In der vorgeschlagenen Ausbildung kann insbesondere der Verdichterrotor in beliebiger Bauweise hergestellt werden, beispielsweise aus einem Stück oder mit einzeln auf eine Welle aufgesetzten Stufen, die gegebenenfalls in Umfangsrichtung geteilt oder einstückig sein können. Fügeprobleme gibt es aufgrund des separaten und an den Enden gelagerten Verdichterrotors keine. Insbesondere kann der Verdichterrotor auch stets zu Wartungszwecken separiert von den Radiallagern einzelnen Bearbeitungsschritten zugeführt werden, beispielsweise kann eine separate Überdrehung der Welle oder ein Wuchten problemlos erfolgen. Der Montageaspekt ist von besonderer Bedeutung, da in diesem speziellen Einsatzgebiet bevorzugt gekapselte Radiallager zur Anwendung kommen, die 360° umlaufend und ungeteilt ausgeführt sind. Daher kann der Rotor nicht beidseitig der Lagerstelle größere Durchmesser aufweisen als es der Innendurchmesser des Radiallagers zulässt. Die gekapselte und damit einstückig umlaufende Ausbildung der Radiallager ist insbesondere deshalb vorteilhaft, weil diese somit aggressiven Medien ohne Beschädigung ausgesetzt werden können und keinerlei zusätzliche Sperrdampfversorgungen und ähnliche Dichtmaßnahmen erforderlich sind. Insbesondere eine ansonsten übliche Sperrdampfdichtung ist unter den besonderen Betriebsbedingungen, insbesondere wegen der schlechten Zugänglichkeit und der daraus resultierenden mangelnden Verfügbarkeit von sauberem Sperrgas, keine wirtschaftlich vorteilhafte Möglichkeit.

Daneben bietet die Anordnung und die Ausbildung der Kupplung zusätzliches konstruktives Potential, die beiden Rotoren im erfindungsgemäßen Sinne dynamisch zu beeinflussen. Die Ausbildung der Kupplung als elastische Kupplung, welche lediglich Drehmomente überträgt, eröffnet eine Endkopplung des Verdichterrotors von Biegeschwindungen des Motorrotors. Hierbei ist eine besonders zweckmäßige Option die Verwendung' einer schlanken tordierbaren und aufgrund ihrer Schlankheit biegsamen, also im Wesentlichen biegeschlaffen Welle als Kupplung zwischen den beiden Rotoren. Eine derartige Welle (im englischen auch als Quill-Shaft bezeichnet) ist eine im Wesentlichen wartungsfreie und besonders einfache konstruktive Variante einer elastischen Kupplung. Daneben hat sie aber auch den Vorteil, dass sie Axialkräfte zu übertragen vermag und auf diese Weise für die beiden Rotoren lediglich eine Axiallagerung erforderlich ist.

Besonders zweckmäßig hat sich eine vertikale Anordnung der Verdichtereinheit herausgestellt, nämlich eine vertikale Anordnung des Motorrotors und des Verdichterrotors, so dass sich eine gemeinsame Drehachse in vertikaler Richtung erstreckt. Der Verdichter ist zweckmäßig hierbei derart ausgelegt, dass sich aufgrund der an den verschiedenen Stufen ergebenden Differenzdrücke im Nennbetrieb ein Schub ergibt, der im Wesentlichen der Gewichtskraft des Rotors entspricht und die Orientierung des Schubs derart gewählt wird, dass sich dieser mit der Gewichtskraft kompensiert. Auf diese Weise kann die Axiallagerung der Anordnung verhältnismäßig klein dimensioniert werden, da die dort auftretenden Lagerkräfte während des Betriebes bei Nenndrehzahl gering ausfallen.

Zweckmäßig ist das Gehäuse der Verdichtereinheit zweiteilig ausgeführt, wobei eine Teilfuge zwischen dem Verdichter und dem Motor im Wesentlichen im Bereich der Kupplung vorgesehen ist. Auf dieser Weise kann insbesondere bei großen Modulen der Transport im zerlegten Zustand erfolgen und auch eröffnet diese geteilte Bauweise die Möglichkeit einer modularen Produktpalette. Hierbei ist hervorzuheben, dass die Verdichter aufgrund der stark variierenden Betriebsdrücke, insbesondere aufgrund der unterschiedlichen Ansaug- und Abströmdrücke in ihrer Baugröße stark variieren, während eine Konstanz der Motoreinheit leichter zu gewährleisten ist. Bei dieser Ausführungsform entfaltet die erfindungsgemäße Gestaltung zusätzliche Vorteile, da auch bei Teilung der Verdichtereinheit im Bereich der Kupplung die beiden Rotoren jeweils in den Teilgehäusen radial in einer sicheren Position gehalten werden.

Im Folgenden ist die Erfindung anhand eines speziellen Ausführungsbeispiels unter Bezugnahme auf Zeichnungen näher beschrieben. Die gezeigte Ausführungsform ist lediglich zur Verdeutlichung als Beispiel der Erfindung zu verstehen. Es zeigen:
- Figur 1: einen Querschnitt durch eine schematische Darstellung einer erfindungsgemäßen Verdichtungseinheit,
- Figur 2: eine Schnittdarstellung gemäß des Schnittes AA in Figur 1.

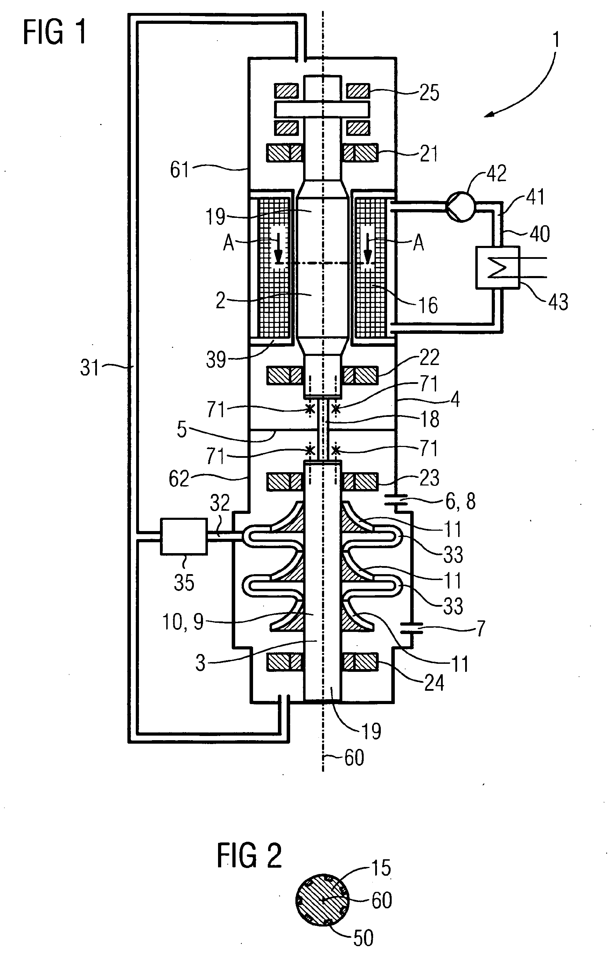

Figur 1 zeigt einen Schnitt längs einer erfindungsgemäßen Verdichtereinheit 1, welche als wesentliche Bauteile einen Motor 2 und einen Verdichter 3 in einem gasdicht ausgebildeten Gehäuse 4 aufweist. Das Gehäuse 4 ist mit einer axialen Teilfuge 5 versehen, so dass es in zwei Teilgehäuse zerlegt werden kann. Das erste Teilgehäuse 61 beherbergt den Motor 2 und das zweite Teilgehäuse 62 den Verdichter 3. Im Bereich des zweiten Teilgehäuses 62 ist das Gehäuse 4 mit einem Einlass 6 und einem Auslass 7 versehen, wobei durch den Einlass 6 mittels eines Saugstutzens 8 das zu verdichtende Fluid angesaugt wird und durch den Auslass 7 das verdichtete Fluid abströmt.

Die Verdichtereinheit 1 ist im Betrieb vertikal angeordnet, wobei ein Motorrotor 15 des Motors 2 über einem Verdichterrotor 9 des Verdichters 3 unter Zwischenanordnung einer Kupplung 18 zu einer gemeinsamen Welle 19 vereint sind, die sich um eine gemeinsame vertikale Drehachse 60 dreht.

Der Motorrotor 15 ist in zwei Radiallagern, einem ersten Radiallager 21 am oberen Ende des Motorrotors 15 und einem zweiten Radiallager 22 am unteren Ende gelagert.

Der Verdichterrotor 9 ist ebenfalls an beiden Enden mit einem Radiallager gelagert, einem dritten Radiallager 23 in oberer Position und einem vierten Radiallager 24 in unterer Position.

Am oberen Ende der gemeinsamen Welle 19 also am oberen Ende des Motorrotors 15 ist ein Axiallager 25 vorgesehen. Die Radiallager und das Axiallager arbeiten elektromagnetisch und sind jeweils gekapselt ausgeführt. Die Radiallager erstrecken sich hierbei in Umfangsrichtung um die jeweilige Lagerstelle der Welle 19 und sind hierbei 360° umlaufend und ungeteilt ausgebildet.

Die Kupplung 18 zwischen den beiden Rotoren 9, 15 ist mittels Schrauben 71 an den beiden Rotoren endseitig befestigt. Die Kupplung 18 ist als schlanke biegeschlaffe und tordierbare Welle ausgebildet, die aufgrund ihrer besonderen Bearbeitung hohe Drehmomente zu übertragen vermag, wobei sie vergleichbar mit einer Torsionsfeder über ihre Länge tordiert wird. Derartige Wellen werden auch als Quill-Shaft bezeichnet. Diese elastische Kupplung übertragt in Folge ihrer besonderen Ausbildung 18 das Torsionsmoment zwischen dem Motor 2 und dem Verdichter 3 und entkoppelt beide weitestgehend von der Schwingung des jeweils anderen Bauelements. Insbesondere werden keine Biegeschwingungen übertragen. Darüber hinaus ist die Kupplung 18 in der Lage Axialkräfte zu übertragen, so dass für den Motor 2 und den Verdichter 3 nur ein gemeinsames Axiallager 25 erforderlich ist.

Der als Zentrifugalverdichter ausgebildete Verdichter 3 weist drei Verdichterstufen 11 auf, die jeweils mittels einer Überströmung 33 in Verbindung stehen. Die sich an den Verdichterstufen 11 ergebenen Druckdifferenzen sorgen für einen Schub an dem Verdichterrötor 9, der sich über die Kupplung 18 auf dem Motorrotor 15 überträgt und entgegen der Gewichtskraft des sich ergebenden gesamten Rotors aus Verdichterrotor 9, Kupplung 18 und Motorrotor 15, gerichtet ist, so dass ein im Nennbetrieb weitestgehender Schubausgleich erfolgt. Auf diese Weise kann das Axiallager 25 vergleichsweise kleiner dimensioniert sein als in einer horizontalen Anordnung.

Die elektromagnetischen Lager 21 - 24, 25 sind mittels eines Kühlsystems 31 auf Betriebstemperatur gekühlt, wobei das Kühlsystem 31 eine Anzapfung 32 in einer Überströmung des Verdichters 3 vorsieht. Von der Anzapfung 32 wird mittels Rohrleitungen ein Teil des Fördermediums, welches vorzugsweise Erdgas ist, durch einen Filter 35 geleitet und anschließend durch zwei separate Rohrleitungen zu den jeweils äußeren Lagerstellen (erstes Radiallager 21 und viertes Radiallager 24 sowie Axiallager 25) geführt. Diese Kühlung mittels des kalten Fördermediums erspart zusätzliche Versorgungsleitungen.

Der Motorrotor 15 ist von einem Stator 16 umgeben, der eine Kapselung 39 aufweist, so dass das aggressive Fördermedium Wicklungen des Stators 16 nicht beschädigt. Die Kapselung ist hierbei bevorzugt so ausgelegt, dass sie den vollen Betriebsdruck zu ertragen vermag. Dies auch deshalb, weil eine separate Statorkühlung 40 vorgesehen ist, die ein eigenes Kühlmedium 41 über einen Wärmetauscher 43 mittels einer Pumpe 42 fördert. Zumindest ist die Kapselung 39 derart ausgeführt, dass der Abschnitt, der sich zwischen dem Stator 16 und dem Motorrotor 15 erstreckt zwar eine dünne Wandstärke aufweist jedoch bei einer vollständigen Füllung der Statorkühlung 40 mittels des Kühlmediums 41 in der Lage ist, dem Auslegedruck Stand zu halten. Auf diese Weise werden größere Wirbelstromverluste in diesem Bereich vermieden und der Wirkungsgrad der Gesamtanordnung verbessert sich.

Der Verdichterrotor 9 weist zweckmäßig eine Verdichterwelle 10 auf, auf der die einzelnen Verdichterstufen 11 montiert sind. Dies kann bevorzugt mittels einer thermischen Schrumpfpassung erfolgen. Ebenso ist ein Formschluss, beispielsweise mittels Polygonen möglich. Eine andere Ausführungsform sieht eine Schweißung verschiedener Verdichterstufen 11 an einander vor, aus der ein einstückiger Verdichterrotor 9 resultiert.

Figur 2 zeigt einen Schnitt (A-A) durch den Motorrotor 15 im Bereich des Motors 2. Der Motorrotor 2 weist Ausnehmungen auf, in welche Leiterelemente 50 eingesetzt sind.

## Patentansprüche

1. Verdichtereinheit (1), insbesondere für den Unterwasserbetrieb, umfassend einen Verdichter (3), mit einem Verdichterrotor (9), der eine oder mehrere Verdichterstufen (11) aufweist, weiterhin umfassend einen elektrischen Motor (2) mit einem Stator (16) und einem Motorrotor (15) und umfassend ein gasdichtes Gehäuse (4), das mit einem Einlass (6) und einem Auslass (7) versehen ist,
wobei der Motorrotor (15) zwei jeweils endseitig angeordnete Radiallager (21, 22), ein erstes Radiallager (21) und ein zweites Radiallager (22) aufweist,
wobei der Verdichterrotor zwei jeweils endseitig angeordnete Radiallager (23, 24), ein drittes Radiallager (23) und ein viertes Radiallager (24) aufweist und
wobei eine Kupplung (39) zwischen den beiden Rotoren (15, 9) angeordnet ist, welche Drehmomente überträgt,
**dadurch gekennzeichnet,**
**dass** der Verdichterrotor (9) und der Motorrotor (15) verbunden mittels der Kupplung (39) einen gemeinsamen sich in vertikaler Richtung erstreckenden Rotor bilden, wobei der Verdichter derart ausgelegt ist, dass sich aufgrund der an den verschiedenen Stufen ergebenden Differenzdrücke im Nennbetrieb ein Schub ergibt, der im Wesentlichen der Gewichtskraft des Rotors entspricht und die Orientierung des Schubs derart gewählt wird, dass sich dieser mit der Gewichtskraft kompensiert.

2. Verdichtereinheit (1) nach Anspruch 1,
**dadurch gekennzeichnet, dass**
die Kupplung (39) als elastische Kupplung ausgebildet ist.

3. Verdichtereinheit (1) nach einem der vorhergehenden Ansprüche,
**dadurch gekennzeichnet, dass**
die Radiallager als elektromagnetische Lager ausgebildet sind.

4. Verdichtereinheit (1) nach einem der vorhergehenden Ansprüche,
**dadurch gekennzeichnet, dass**
mindestens ein Axiallager an einem der Rotoren (15, 9) vorgesehen ist.

5. Verdichtereinheit (1) nach einem der vorhergehenden Ansprüche,
**dadurch gekennzeichnet, dass**
die Kupplung als schlanke und tordierbare Welle zwischen den beiden Rotoren (15, 9) ausgebildet ist.

6. Verdichtereinheit (1) nach einem der vorhergehenden Ansprüche,
**dadurch gekennzeichnet, dass**
genau ein Axiallager vorgesehen ist.

7. Verdichtereinheit (1) nach Anspruch 1,
**dadurch gekennzeichnet, dass**
in der vertikalen Anordnung der Motorrotor (15) über dem Verdichterrotor (9) angeordnet ist.

8. Verdichtereinheit (1) nach dem vorhergehenden Anspruch,
**dadurch gekennzeichnet, dass**
das Axiallager (25) im oberen Bereich des Motorrotors (15 angeordnet ist.

9. Verdichtereinheit (1) nach einem der vorhergehenden Ansprüche,
**dadurch gekennzeichnet, dass**
der Motorrotor (15) in gestapelter Schichtbauweise ausgebildet ist.

10. Verdichtereinheit (1) nach einem der vorhergehenden Ansprüche,
**dadurch gekennzeichnet, dass**
der Motorrotor in durchgehender Bauweise und mit in Ausnehmungen, die sich in Längsrichtung erstrecken, eingesetzten Leiterelementen (50) ausgebildet ist.

11. Verdichtereinheit (1) nach einem der vorhergehenden Ansprüche,
**dadurch gekennzeichnet, dass**
die Radiallager und Axiallager gekapselt ausgebildet sind.

## Claims

1. Compressor unit (1), especially for underwater operation, comprising a compressor (3), with a compressor rotor (9) which has one or more compressor stages (11), furthermore comprising an electric motor (2) with a stator (16) and a motor rotor (15), and comprising a gastight casing (4) which is provided with an inlet (6) and an outlet (7),
wherein the motor rotor (15) has two radial bearings (21, 22) which are arranged at the ends in each case, these being a first radial bearing (21) and a second radial bearing (22),
wherein the compressor rotor has two radial bearings (23, 24) which are arranged at the ends in each case, these being a third radial bearing (23) and a fourth radial bearing (24),
and
wherein a coupling (39), which transmits torque, is arranged between the two rotors (15, 9),
**characterized in that**
the compressor rotor (9) and the motor rotor (15), which are connected by means of the coupling (39), form a common rotor which extends in the vertical direction, wherein the compressor is designed in such a way that, on account of the pressure differences which result at the different stages during operation at nominal rating, a thrust ensues which corresponds essentially to the weight force of the rotor, and the orientation of the thrust is selected in such a way that this is compensated by the weight force

2. Compressor unit (1) according to Claim 1,
**characterized in that**
the coupling (39) is formed as a flexible coupling.

3. Compressor unit (1) according to one of the preceding claims,
**characterized in that**
the radial bearings are formed as electromagnetic bearings.

4. Compressor unit (1) according to one of the preceding claims,
**characterized in that**
at least one thrust bearing is provided on one of the rotors (15, 9).

5. Compressor unit (1) according to one of the preceding claims,
**characterized in that**
the coupling is formed as a slender and twistable shaft between the two rotors (15, 9).

6. Compressor unit (1) according to one of the preceding claims,
**characterized in that**
just one thrust bearing is provided.

7. Compressor unit (1) according to Claim 1,
**characterized in that**
in the vertical arrangement the motor rotor (15) is arranged above the compressor rotor (9).

8. Compressor unit (1) according to the preceding claim,
**characterized in that**
the thrust bearing (25) is arranged in the upper region of the motor rotor (15).

9. Compressor unit (1) according to one of the preceding claims,
**characterized in that**
the motor rotor (15) is formed in a stacked lamination type of construction.

10. Compressor unit (1) according to one of the preceding claims,
**characterized in that**
the motor rotor is formed in a through-going type of construction and with conductor elements (50) which are inserted in recesses which extend in the longitudinal direction.

11. Compressor unit (1) according to one of the preceding claims,
**characterized in that**
the radial bearings and thrust bearing are formed in an encapsulated manner.

## Revendications

1. Groupe ( 1 ) compresseur, notamment pour un fonctionnement sous l'eau, comprenant un compresseur ( 3 ), ayant un rotor ( 9 ) de compresseur, qui a un ou plusieurs étages ( 11 ) de compresseur, comprenant en outre un moteur ( 2 ) électrique ayant un stator ( 16 ) et un rotor ( 15 ) de moteur et comprenant un carter ( 4 ) étanche au gaz qui est pourvu d'une admission ( 6 ) et d'une évacuation ( 7 ),
dans lequel le rotor ( 15 ) du moteur a deux paliers ( 21, 22 ) radiaux disposés respectivement du côté de l'extrémité, un premier palier ( 21 ) radial et un deuxième palier ( 22 ) radial,
dans lequel le rotor du compresseur a deux paliers ( 23, 24 ) radiaux disposés respectivement du côté de l'extrémité, un troisième palier ( 23 ) radial et un quatrième palier ( 24 ) radial et
dans lequel un accouplement ( 39 ), qui transmet les couples de rotation, est disposé entre les deux rotors ( 15, 9 ), **caractérisé,**
**en ce que** le rotor ( 9 ) du compresseur et le rotor ( 15 ) du moteur sont reliés au moyen de l'accouplement ( 39 ) en rotor commun s'étendant dans la direction verticale, le compresseur étant tel qu'en raison des pressions différentes se produisant aux divers étages, il se produit en fonctionnement nominal une poussée qui correspond sensiblement au poids du rotor et l'orientation de la poussée est choisie de manière à ce que celle-ci se compense avec le poids.

2. Groupe ( 1 ) compresseur suivant la revendication 1,
**caractérisé en ce que**
l'accouplement ( 39 ) est constitué sous la forme d'un accouplement élastique.

3. Groupe ( 1 ) compresseur suivant l'une des revendications précédentes,
**caractérisé en ce que** les paliers radiaux sont constitués sous la forme de paliers électromagnétiques.

4. Groupe ( 1 ) compresseur suivant l'une des revendications précédentes,
**caractérisé en ce qu'**au moins un palier axial est prévu sur l'un des rotors ( 15, 9 ).

5. Groupe ( 1 ) compresseur suivant l'une des revendications précédentes,
**caractérisé en ce que** l'accouplement est constitué sous la forme d'un arbre mince et pouvant subir une torsion entre les deux rotors ( 15, 9 ).

6. Groupe ( 1 ) compresseur suivant l'une des revendications précédentes,
**caractérisé en ce qu'**il est prévu exactement un palier axial.

7. Groupe ( 1 ) compresseur suivant la revendication 1, **caractérisé en ce que** dans l'agencement vertical le rotor ( 15 ) du moteur est disposé au dessus du rotor ( 9 ) du compresseur.

8. Groupe ( 1 ) compresseur suivant l'une des revendications précédentes, **caractérisé en ce que** le palier ( 25 ) axial est disposé dans la partie supérieure du rotor ( 15 ) du moteur.

9. Groupe ( 1 ) compresseur suivant l'une des revendications précédentes, **caractérisé en ce que** le rotor ( 15 ) du moteur est constitué en mode de construction stratifiée empilé.

10. Groupe ( 1 ) compresseur suivant l'une des revendications précédentes, **caractérisé en ce que** le rotor du moteur est constitué en mode de construction continu et ayant des éléments ( 50 ) conducteurs insérés dans des cavités qui s'étendent dans la direction longitudinale.

11. Groupe ( 1 ) compresseur suivant l'une des revendications précédentes, **caractérisé en ce que** les paliers radiaux et les paliers axiaux sont constitués de manière encapsulée.
